# EUROPÄISCHE PATENTSCHRIFT

(11) **EP 3 428 414 B1**
(45) Veröffentlichungstag und Bekanntmachung des Hinweises auf die Patenterteilung: **07.06.2023**
(21) Anmeldenummer: 18000585.2
(22) Anmeldetag: 09.07.2018
(51) Int. Cl.: F01N 3/08, F01N 3/10, F01N 3/20, F01N 3/36, F01N 9/00, F01N 11/00, F01N 13/00

(54) **VORRICHTUNG UND VERFAHREN FÜR ABGASREINIGUNGSSYSTEME VON DIESELFAHRZEUGEN, INSBESONDERE ZUR NACHRÜSTUNG VON DIESEL-BESTANDSFAHRZEUGEN MIT EINEM DIESELPARTIKELFILTER, INSBESONDERE FÜR DEN INNERSTÄDTISCHEN FAHRBETRIEB**
DEVICE AND METHOD FOR EXHAUST GAS CLEANING SYSTEMS OF A DIESEL VEHICLE, IN PARTICULAR FOR RETROFITTING EXISTING DIESEL VEHICLES WITH A DIESEL PARTICLE FILTER, IN PARTICULAR FOR DRIVING IN CITY CENTRES
DISPOSITIF ET PROCÉDÉ POUR SYSTÈMES DE PURIFICATION DES GAZ D'ÉCHAPPEMENT DES VÉHICULES DIESEL, EN PARTICULIER DESTINÉS À LA MISE À NIVEAU DES VÉHICULES DIESEL POURVUS DE FILTRE À PARTICULES DIESEL, EN PARTICULIER POUR UN MODE DE CONDUITE URBAIN

(30) Priorität: 11.07.2017 DE 102017006738
(43) Veröffentlichungstag der Anmeldung: 16.01.2019
(73) Patentinhaber: Goldbach, Torsten, 59519 Möhnesee (DE)
(72) Erfinder: Goldbach, Torsten, 59519 Möhnesee (DE)
(74) Vertreter: Schneider, Uwe

(56) Entgegenhaltungen:
- EP-A1- 2 495 410
- DE-A1- 19 626 837
- DE-A1-102012 204 385
- DE-A1-102015 202 727

## Beschreibung

Die Erfindung betrifft eine Vorrichtung für Abgasreinigungssysteme von Dieselfahrzeugen zur Nachrüstung von Diesel-Bestandsfahrzeugen mit einem Dieselpartikelfilter als unterstützendes System für Fahrzeuge mit vorhandenen Abgasbehandlungssystemen, insbesondere für den innerstädtischen Fahrbetrieb, gemäß Oberbegriff des Anspruches 1 sowie ein entsprechendes Verfahren gemäß Anspruch 12.

Derzeit wird eine Diskussion über zu hohe Stickstoffoxid-Emissionen (NOₓ-Emissionen) der in Europa zugelassenen Bestands-Fahrzeuge der Abgasstufen ab EU4, insbesondere der Dieselbestandsflotte geführt. Diese Diskussion hat ihre Grundlage darin, dass eine hohe Diskrepanz zwischen den ermittelten Zulassungswerten im gesetzlichen Abgastest NEFZ (Neuer Europäischer Fahr-Zyklus) und den tatsächlich emittierten Emissionen im normalen Fahrbetrieb (RDE - Real Driving E-missions) festgestellt wurde.

Das eingeleitete EU-Vertragsverletzungsverfahren gegen die Bundesrepublik Deutschland wegen NO₂-Grenzwertüberschreitung und die aktuellen, relevanten Verkehrsemissionen verlangen nach einem wirkungsvollen und zeitnahen Konzept für eine signifikante Reduzierung dieser Umweltbelastung. Aktuell findet eine politische Diskussion über die Einführung einer "Blauen Plakette" oder Fahrverbote für Innenstädte für Dieselfahrzeuge statt. Diese "Blaue Plakette" soll Dieselfahrzeuge auf Basis der RDE-Kriterien nach ihren Emissionswerten differenzieren und somit diese Fahrzeuge für entsprechende Umweltzonen zulassen. Die hierfür anzuwendenden gesetzlichen Randbedingungen sind derzeit aber noch unklar. Im Oktober 2015 wurden in Brüssel die neuen RDE-Kriterien und RDE-Termine festgelegt. Diese Kriterien werden in zwei Stufen eingeführt (Euro 6: RDE 1 = 09/2019, RDE 2 = 01/2021 ab 01.09.2017 mit CF=2,1; Stufe 2 ab 01.01.2020 mit CF=1 und CF = zulässiger Verschlechterungsfaktor gegenüber dem Abgastest). Somit ist eine kurzfristige Ablösung der Dieselbestandsflotte nach den zukünftigen RDE-Kriterien unrealistisch.

Entsprechend der aktuellen NO₂ Grenzwertüberschreitungen in Deutschland und weiteren europäischen Staaten ist ein durchgängiges Konzept zur Reduktion der Emissionen von Dieselmotoren in allen Marktsegmenten (On- und Non-Road) und insbesondere auch als Nachrüstlösung für die Bestandsfahrzeuge notwendig.

In der Motorentwicklung von Verbrennungsmotoren ist bekannt, die Abgas-Grenzwerte der jeweilig geltenden Abgasnorm gemäß des gesetzlichen Abgasprüfverfahrens im NEFZ oder anderen Abgaszyklen mit einem entsprechenden Sicherheitsabstand darzustellen. Grundlage dieser Emissionsentwicklung ist somit der geltende Abgastest-Zyklus, sowie das bestehende Zulassungsverfahren.

Im Motorsteuergerät werden entsprechend der Betriebsvorgaben aus dem Abgastest-Zyklus (NEFZ) im Hinblick auf die verschieden Betriebszustände (Start, Warmlauf, Leerlauf, Stationärer Betrieb, Instationärer Betrieb, Schubbetrieb, Übergänge zwischen den Betriebszuständen) die Motorparameter zur Reduzierung der Abgasrohemissionen sowie der nachmotorischen Abgasnachbehandlungssysteme abgestimmt. Die Parametrierung des Motorsteuerungssystems betrifft das Einspritzsystem und die Systeme der Füllungssteuerung (Rohluft, Aufladung, Abgasrückführung, Drallklappen, Drosselklappen, variable Ventilsteuerung), sowie die Abgasnachbehandlungssysteme wie Oxidations-, NOₓ-Speicher-, SCR-Katalysatoren und Partikelfiltersysteme.

Die Reduktion des Kraftstoffverbrauchs und der Emissionen (CO, HC, NOₓ, PM, PN) bei gleichzeitiger Leistungssteigerung und erhöhten Anforderungen an die Geräuschemissionen führt zu gestiegenen Ansprüchen an das Einspritz-/Luftsystem und einer an jeden Betriebspunkt angepassten Einspritzmenge, Einspritzbeginn, Voreinspritzung und gegebenenfalls Nacheinspritzung, Einspritzdrücke, Einspritzverlaufsformung, Ladedruck, geregelte Abgasrückführung und Sollluftmasse, Thermomanagement und Reduktionsverfahren zur Stickoxidumwandlung.

Die genannten Entwicklungsziele wie Verbrauch, Emissionen, Leistung und Akustik verhalten sich jedoch teilweise kontrovers zu einander. Zum Beispiel wird bei niedriger Motorlast eine hohe Abgasrückführrate angestrebt, um die NOₓ-Emissionen zu reduzieren. Im dynamischen Betrieb aus diesem Niedriglastpunkt kann sich hierdurch jedoch ein schlechterer Drehmomentaufbau ergeben.

Aufgrund dieser negativen Wechselwirkungen erfolgt in den verschiedenen Motorbetriebspunkten eine entsprechende Priorisierung zugunsten der jeweiligen Entwicklungsziele: Verbrauch, Emissionen, Akustik oder Leistung.

Bei einem Betrieb von Verbrennungsmotoren, insbesondere von Dieselmotoren, entstehen in nicht geringem Umfang Stickoxide NOₓ. Dabei entstehen umso mehr Stickoxide, je sparsamer und damit magerer der Dieselmotor betrieben wird. Es ist daher notwendig, um die gesetzlichen Abgasnormen zu erfüllen, die im Abgas mitgeführten Stickoxide aus dem Abgas zu eliminieren oder in unschädliche Verbindungen zu zersetzen.

Hierzu werden prinzipiell zwei Reinigungsstrategien eingesetzt:
- Systeme mit SCR (selective catalytic reduction)
   Gemäß einer ersten Entstickungsmethode wird eine kontinuierliche Entstickung durch selektive katalytische Reduktion der Stickoxide mit einem so genannten SCR-Katalysator vorgenommen. Um die erforderliche chemische Reaktion mit dem SCR-Katalysator zu erreichen, wird ein Reduktionsmittel benötigt, wobei sich Ammoniak als Reduktionsmittel bewährt hat und zu diesem Zweck im Fahrzeug mitgeführt werden muss. Dies erfolgt in Form eines Precursors und zwar als Urea (Harnstoff). Entsprechend der jeweils zu verarbeitendenden NOx-Menge im Abgas wird das handelsseitig AdBlue^{®} genannte Urea kontinuierlich zum Durchführen der Entstickung stromauf des SCR-Katalysators in den Abgasstrang eingebracht. Als Nachteil ist anzusehen, dass für eine Nachrüstlösung mit SCR ein zusätzlicher Tank für das AdBlue^{®} notwendig ist. Der Einfüllstutzen muss günstig platziert sein. Schwer zugängliche Einfüllstutzen in den Tiefen des Kofferraums sind eine Zumutung für den Autofahrer und schrecken nur ab, zudem ist AdBlue^{®} stark ätzend und das Einfüllen muss daher möglichst sauber erfolgen. Eine Platzierung des AdBlue^{®}-Einfüllstutzens neben dem Diesel-Einfüllstutzen erleichtert das Nachtanken von AdBlue^{®} erheblich. Dies ist aber für eine Nachrüstlösung bei Bestandfahrzeugen kaum darstellbar, da hohe Installationskosten entstehen für den Tank, das Einfüllsystem, Systeme zur Adblue-Aufbereitung und Adblue-Heizung.
- Systeme ohne SCR
   Gemäß einer anderen Entstickungsmethode wird in dem Abgasstrang des Dieselfahrzeugs ein NOx-Speicherkatalysator vorgesehen, der im Abgas mitgeführtes NOx einlagert. Die Speicherkapazität eines solchen NOx-Speicherkatalysators ist aber begrenzt. Deshalb muss ein solcher NOx-Speicherkatalysators regeneriert werden. Bei der Regenerierung des NOx-Speicherkatalysators werden die eingelagerten NOx wieder freigesetzt und mit einem zugeführten Reduktionsmittel (Diesel-Kraftstoff) in unschädliche Reaktionsprodukte aufgespalten. Damit erfolgt anders als bei der kontinuierlichen Entstickung mit einem SCR-Katalysator bei einem NOx-Speicherkatalysator die Entstickung diskontinuierlich jeweils bei der Regeneration. Vorteilhaft ist bei NOₓ-Speicherkatalysatoren, dass Kohlenwasserstoffe (HCs) als Reduktionsmittel verwendet werden können. Deshalb braucht bei einem Einsatz eines NOₓ-Speicherkatalysators kein zusätzliches Reduktionsmittel oder ein Precursor davon mitgeführt zu werden, da zur Regenerierung die Kohlenwasserstoffe der Kraftstoff genutzt werden kann. Mehrere Hersteller haben derartige Systeme zur Reduzierung der Stickstoffoxid-Emissionen und der Regeneration von Partikelfiltern am Markt, die mittels Speicherkatalysatoren arbeiten und zur Regeneration der Speicherkatalysatoren eine Dieseleinspritzung in den Abgasstrom vornehmen (z.B. Departronic von Bosch, Faurecia Reformator, HJS). Diese Systeme werden für schwere Baumaschinen oder LKW eingesetzt. Diese Systeme arbeiten mit herkömmlichen Dosierventilen und nicht im PKW-Bereich. Diese Systeme sind nicht für den innerstädtischen Betrieb ausgelegt. Für PKW Anwendungen sind E-DOC-Systeme in Verbindung mit einem SCR oder DPF (Diesel-Partikelfilter) bekannt und dienen als zusätzliche Heizmaßnahme. Diese Systeme werden als motornahe Systeme unmittelbar nach dem Turbolader eingesetzt und sind nicht als motorferne Systeme im Unterbodenbereich mit einem vorgeschalteten, zeitgesteuerten HDEV, welches unabhängig vom Serieneinspritzsystem und dessen Betriebszuständen das Thermomanagement der Nachrüstlösung übernimmt, bekannt. Zudem sind die oben genannten Systeme, wie z.B. die Departronic von Bosch, nicht geeignet für die NOₓ-Regeneration bei dynamischer PKW-Anwendung - wie etwa im innerstädtischen Betrieb. Ursächlich hierfür ist unter anderem die fehlende Modularität des Dosierventils für eine Einspritzung von sehr geringen Kraftstoffmengen sowie das notwendige Dynamikverhalten bei sich rasch ändernden Motorbetriebsbedingungen.

Ein Nachrüstsystem zur Verringerung der Stickoxidemissionen von Serien-PkW und eine Anhebung einer bestehenden Abgasstufe auf eine höhere Abgasstufe (z.B. EU4 auf EU6 oder neuer) ohne die Verwendung eines SCR-Abgassystems ist derzeit nicht bekannt.

Aus der DE 10 2012 204 385 A1, der DE 10 2015 202 727 A1, der EP 2 495 410 A1 und der DE 196 26 837 sind Systeme bekannt, bei denen die motorintegrierte Abgasreinigungsanlage zu der nur periodisch erforderlichen Regeneration von NSC-Katalysatoren derart betrieben werden, dass der NSC-Katalysator unabhängig von der aktuellen Fahrsituation und den Abgas- bzw. Komponententemperaturen in einem speziellen Regenerationszyklus auf die Regenerationstemperatur gebracht und dort über längere Zeit gehalten werden muss. Das hilft aber z.B. für den städtischen Kurzstreckenbetrieb nicht, um ein möglichst schnelles optimales Funktionieren des Stickoxidkatalysatoren zu gewährleisten,

Aufgabe der vorliegenden Erfindung ist es daher, zur Reduzierung der NOₓ-Emissionen von Diesel-Bestandsfahrzeugen ab Fahrzeugen mit Dieselpartikelfilter insbesondere in der Stadt eine Nachrüstlösung vorzuschlagen, die eine Abgasreduzierung ohne zusätzliches Reduktionsmittel wie z.B. AdBlue^{®} als zusätzlichen Betriebsstoff ermöglicht.

Die Lösung der erfindungsgemäßen Aufgabe ergibt sich hinsichtlich der Vorrichtung aus den kennzeichnenden Merkmalen des Anspruches 1 und hinsichtlich des Verfahrens aus den Merkmalen des Anspruchs 12 in Zusammenwirken mit den Merkmalen des zugehörigen Oberbegriffes. Weitere vorteilhafte Ausgestaltungen der Erfindung ergeben sich aus den Unteransprüchen.

Die Erfindung hinsichtlich der Vorrichtung geht aus von einer Vorrichtung für Abgasreinigungssysteme von Dieselfahrzeugen zur Nachrüstung von Diesel-Bestandsfahrzeugen mit einem Dieselpartikelfilter oder ergänzend für Neuentwicklungen als unterstützendes System für Fahrzeuge mit vorhandenen Abgasbehandlungssystemen, insbesondere für den innerstädtischen Fahrbetrieb. Eine derartige gattungsgemäße Vorrichtung wird dadurch weiter entwickelt, dass stromab eines fahrzeugseitig bereits vorhandenen Abgasreinigungssystems des Dieselfahrzeugs in der Vorrichtung mindestens ein Hochdruck-Einspritzventil (HDEV) und mindestens ein NOₓ-Speicher-Katalysator (NSC) in Strömungsrichtung des Abgases funktionsmäßig hintereinander angeordnet sind, wobei das vor dem NOₓ-Speicher-Katalysator (NSC) installierte Hochdruck-Einspritzventil (HDEV) zumindest in Fahrzuständen, in denen der NOₓ-Speicher-Katalysator (NSC) nicht hinreichend erwärmt wird, derart Kraftstoff in die Vorrichtung eindosiert, dass durch die katalytische Umsetzung des eindosierten Kraftstoffs eine Temperaturanhebung in dem NOₓ-Speicher-Katalysator (NSC) durch exotherme Reaktion des Kraftstoffs erfolgt, welche die Temperatur im NOₓ-Speicher-Katalysator (NSC) in einen Bereich der optimalen NOₓ-Umsetzung bringt.

Der verwendete NOₓ-Speicherkatalysator (NSC) benötigt eine bestimmte Light-Off-Temperatur, um die Stickoxide einzuspeichern (typischerweise in einem Temperaturfenster von ca. 150 - 500 °C). Im typischerweise von kurzen Fahrstrecken gekennzeichneten innerstädtischen Betrieb des Kraftfahrzeugs können die Temperaturen innerhalb des NSC unterhalb dieser unteren Grenze des Temperaturfensters, der sog. Light-Off-Temperatur, liegen, so dass der NSC und damit das Abgasreinigungssystem in Bezug auf Stickoxide nahezu unwirksam ist. Um trotzdem auch bei kurzen Fahrstrecken einen wirksamen Betrieb des NSC zu ermöglichen, muss dieses Temperaturfenster schnellstmöglich erreicht werden. Im einfachsten Fall kann diese Erhöhung der Abgastemperatur im NSC dadurch erreicht werden, dass das HDEV zumindest zeitweise zusätzlich Kraftstoff in die Abgasanlage eindosiert und dadurch mittels katalytischer Umsetzung des eindosierten Kraftstoffs eine Temperaturanhebung in dem NSC durch exotherme Reaktion des Kraftstoffs bewirkt. Da der NOₓ-Speicherkatalysator NSC auch eine Wirkung als Oxidationskatalysator besitzt, kann er während des Eindosierens von Kraftstoff durch das HDEV zusätzlich CO und HC oxidieren und durch die katalytische Umsetzung zusätzlich Wärme zur Erreichung der optimalen Betriebstemperatur im NSC freisetzen. Der mittels HDEV eindosierte Kraftstoff setzt sich im NSC unter gleichzeitiger Erwärmung des NSC mit dem im Abgas vorhandenen Sauerstoff um und die zusätzlich eingebrachten Kraftstoffanteile (HC) reagieren mit dem eingelagerten NOₓ zu Stickstoff, Kohlendioxid und Wasser. Damit kann allein durch das zusätzliche Eindosieren von Kraftstoff durch das HDEV gerade in den Fahrbereichen, in denen der NSC z.B. im Kurzstreckenbetrieb nicht hinreichend erwärmt wird und daher uneffektiv oder gar nicht arbeitet, wesentlich schneller die notwendige Temperatur des NSC erreicht werden, damit dieser das Abgas effektiv reinigen kann.

In einer weiteren vorteilhaften Ausgestaltung ist es denkbar, dass zwischen Hochdruck-Einspritzventil (HDEV) und NOₓ-Speicher-Katalysator (NSC) mindestens ein Oxidationskatalysator (DOC) oder mindestens ein elektrisch beheizter Oxidationskatalysator (E-DOC) angeordnet ist. Ein solcher DOC oder E-DOC kann das Aufheizverhalten des NSC weiter verbessern, indem durch den von dem HDEV zumindest zeitweise eindosierten Kraftstoff durch die katalytische Umsetzung des eindosierten Kraftstoffs eine weitere Temperaturanhebung im DOC oder E-DOC durch exotherme Reaktion des Kraftstoffs erfolgt, welche die Temperatur im NSC in einen Bereich der optimalen NOₓ-Umsetzung bringt und eine Aufheizung des NSC zur schnellen Betriebsbereitschaft und der Erreichung eines hohen Wirkungsgrades beiträgt. Hierbei wird die Abgastemperatur aufgrund des Eindosierens von Kraftstoff mittels HDEV schon im DOC oder E-DOC erhöht und das schon weiter vorgewärmte Abgas tritt mit einer höheren Temperatur in den NSC ein, so dass im NSC die Abgasreinigung effektiver ablaufen kann.

In weiterer Ausgestaltung ist es bei Anordnung mindestens eines E-DOC zwischen HDEV und NSC auch denkbar, dass die Heizeinrichtung des E-DOC unterhalb der Light-Off-Temperatur des E-DOC die Temperatur im E-DOC auf die erforderliche Light-Off-Temperatur des E-DOC anhebt. Hierzu kann der E-DOC in Verbindung mit den HDEV als zusätzliche Heizung für den NSC eingesetzt werden. Um dieses Problem zu lösen, wird bei der erfindungsgemäßen Vorrichtung unterhalb der beschriebenen Light-Off-Temperatur des NSC zuerst über eine Heizeinrichtung mit Hilfe eines elektrisch beheizten Oxidationskatalysators (E-DOC) die Temperatur im E-DOC bis auf die erforderliche Light-Off-Temperatur des E-DOC angehoben, die typischerweise etwa im Bereich ab ca. 150 °C liegt. Mit Erreichen dieser Light-Off-Temperatur im E-DOC werden im E-DOC Reduktions-/Oxidtionsvorgänge von HC und CO in Gang gesetzt, so dass ab dieser Light-Off-Temperatur des E-DOC das vor dem E-DOC installierte Hochdruck-Einspritzventil (HDEV) Kraftstoff in die Abgasanlage eindosieren kann. Durch die katalytische Umsetzung des derart eindosierten Gemisches erfolgt eine weitere Temperaturanhebung durch exotherme Reaktion des eindosierten Gemisches im Katalysator des E-DOC, welche das Abgas erwärmt und über das aus dem E-DOC in den NSC eintretende Abgas die Temperatur im NSC in sein Arbeitsfenster der optimalen NOₓ-Umsetzung bringt. Die elektrische Beheizung des E-DOC dient dabei vornehmlich zur Sicherstellung der Light-Off-Temperatur im E-DOC, um dann durch die Freigabe der Eindosierung des Kraftstoffs durch das HDEV gerade für den innerstädtischen Betrieb des Fahrzeugs die optimalen Betriebsbedingungen des NSC und damit den optimalen Grad an Schadstoffreduzierung in Bezug auf NOₓ schnellstmöglich zu erreichen.

Wichtig ist zudem die Vermeidung von Sekundäremissionen wie beispielsweise HC, CO, PM (Partikel) durch die erfindungsgemäße autarke Einspritzung von Kraftstoff mittels HDEV in die Abgasanlage. Diese Sekundäremissionen werden durch den nachgerüsteten DOC oder E-DOC und den nachgeschalteten NSC bei entsprechender Berücksichtigung der Einspritzfreigabe durch das HDEV bis zum Erreichen der Light-Off-Temperatur des DOC oder E-DOC vermieden. PM entstehen aufgrund der niedrigen Temperaturen und der Vermeidung von fetten Gemischen bei einem Lambda größer als 0,85 nicht Die zum optimalen Wirkungsgrad des NSC benötigte Temperatur wird unmittelbar vor dem NSC erzeugt, also dort, wo sie benötigt wird. Hierdurch werden zudem Wärmeverluste des Abgases über die Strecke der Abgasanlage reduziert und die Effizienz erheblich verbessert.

Diese entkoppelte Abgasnachbehandlung ermöglicht es, neben der Nachrüstung für Bestands-Kraftfahrzeuge auch die Möglichkeit als unterstützendes System stromabwärts eines bestehenden Abgassystems eingesetzt zu werden. Für Bestands-Kraftfahrzeuge und insbesondere Dieselfahrzeuge lässt sich hierdurch die Aufgabe der Vorheizung des Abgassystems sowie die NOₓ-Speicherkat-Regeneration zur Beibehaltung der Einspeicherfähigkeit von Stickoxiden vor allem auch im innerstädtischen Fahrbetrieb lösen, der bei herkömmlicher Betriebsweise des NOₓ-Speicherkatalysators wie vorstehend beschrieben durch die relativ kurzen gefahrenen Wegstrecken und die damit einhergehende geringe Erwärmung der Katalysatoren immer problematisch ist. Die erfindungsgemäße Vorrichtung ist damit nahezu unabhängig vom jeweiligen Fahrzustand und kann auch mit Biodiesel als Fahrzeugkraftstoff betrieben werden. Ein besonderer Vorteil gegenüber anderen Nachrüstlösungen ist der Verzicht auf ein zusätzliches Betriebsmittel (wie z.B. AdBlue^{®}). Die hierdurch verbundenen Nachteile - wie Einfriergefahr, Leerfahren, Nachtankaufwand, Kosten - entfallen. Die zur katalytischen Wirkung optimale Betriebstemperatur des NSC kann zum Beispiel bei noch relativ kaltem Motor bis zur Erreichung der Light-Off-Temperatur im E-DOC durch die elektrische Beheizung des E-DOC und anschließend durch die Kraftstoffeindosierung des vor dem E-DOC befindlichen HDEV erreicht werden.

Das aus der Benzindirekteinspritzung bekannte HDEV ist zur Eindosierung direkt in die Abgasanlage besonders geeignet, da es für sehr kurze Ansteuerzeiten entwickelt wurde und somit für eine zeitbasierte Ansteuerung mit einer sehr hohen Ansteuerfrequenz auch bei geringen Kraftstoffdrücken für eine sehr gute Gernischzerstäubung sorgt. Da der HDEV für eine Anordnung in dem Brennraum entwickelt wurden, ist eine erfindungsgemäße Nutzung zur Eindosierung in die Abgasanlage temperaturunkritisch. HDEV werden bisher vornehmlich für die innermotorische Injektion von Kraftstoff in einen Brennraum genutzt und demgemäß in oder an einem Zylinderkopf angeordnet, über den derartige HDEV mit gekühlt werden. Die kritischen Temperatur eines HDEV wird vornehmlich durch dessen Magnetspule sowie die Verkabelung und die zugehörigen elektrischen Steckverbindungen festgelegt. Durch eine geeignete Luft- und/oder Wasserkühlung sowie eine geeignete Positionierung des HDEV an Abgasstrang bzw. DOC oder E-DOC kann das erfindungsgemäß angeordnete HDEV trotzdem sicher betrieben werden.

Für den Einsatz der HDEV bei Nachrüstlösungen und als unterstützendes System stromabwärts eines Partikelfilters wird das HDEV typischerweise zeitbasiert angesteuert, im Gegensatz zur Ansteuerung von HDEV im Motor selbst, die üblicherweise abhängig vom Kurbelwellenwinkel erfolgt.

Das HDEV kurz vor dem NSC ist aufgrund der vollen Modularität (kann sehr kleine und sehr große Einspritzmengen im Bereich von Millisekunden einstellen) der dynamischen Einspritzung in Verbindung mit einer Lambdasonde und/oder eines oder auch mehrerer NOₓ-Sensoren in der Lage, eine NOₓ-Speicherkatregeneration mittels einer kurzen Fettphase zur Reduktion der eingelagerten Stickoxide innerhalb weniger Sekunden mit einer optimalen Regelgüte von ca. Lambda = 0,96 zu regeln. Diese Modularität einer autarken Kraftstoffeinspritzung mittels HDEV ist erfindungsgemäß neu und von großem Vorteil bezüglich der Emissionen und des Verbrauchs an Kraftstoff sowie der Emissionssicherheit über die gesamte Laufzeit.

Die erfindungsgemäße Vorrichtung ist robust und dauerhaltbar und zudem ein kostengünstiges und wartungsfreies System. Die Nachrüstlösung für ein Kraftfahrzeug mit einem NOₓ-Speicherkatalysator NSC ist die derzeit beste Lösung zur NOₓ-Reduktion. Es liefert gute und saubere Resultate und bedeutet keinen zusätzlichen Aufwand, nur geringem Mehrverbrauch, geringe Kosten oder Umstände für den Verbraucher. Der Einsatz des E-DOC zur zusätzlichen Heizung des NSC gerade auch im innerstädtischen Betrieb des Kraftfahrzeugs erfolgt dabei in motorferner Lage innerhalb des Abgasstrangs mit einem vorgeschalteten, zeitgesteuerten HDEV, das unabhängig vom Motor-Einspritzsystem und dessen Betriebszuständen das Thermomanagement der Nachrüstlösung übernimmt. Ein NSC ohne HDEV und E-DOC erreicht seine optimale Betriebstemperatur wesentlich später, zudem ist die Temperaturregelung des NSC ohne HDEV für eine Nachrüstlösung an bestehenden Fahrzeugen nicht umsetzbar.

Das HDEV kann dabei typischerweise ein Magnetventil sein, aber auch ein Piezzoventil ist denkbar.

Von besonderem Vorteil ist es, wenn die Vorrichtung im Unterbodenbereich des Fahrzeugs angeordnet ist. Da der Abgasstrang typischer Fahrzeuge ohnehin im Unterbodenbereich der Fahrzeuge verläuft, lässt sich insbesondere eine Nachrüstlösung oder als unterstützendes System zu einem ohnehin vorhandenen Abgasnachbehandlungssystem im Unterbodenbereich gut zusätzlich montieren und in den ohnehin vorhandenen Abgasstrang des Fahrzeugs integrieren.

Von Bedeutung ist weiterhin, dass das HDEV in Strömungsrichtung des Abgases vor dem DOC oder E-DOC angeordnet ist, vorzugsweise im Abgasstrang vor dem DOC oder E-DOC. Das Hochdruckeinspritzventil HEDV kann dabei entweder im Abgasstrang, also vorzugsweise in der Verrohrung hinter einem Dieselpartikelfilter (DPF) und vor dem DOC oder E-DOC oder auch im Eingangsbereich des DOC oder E-DOC selbst angeordnet werden, so dass der von dem HEDV eingespritzte Kraftstoff in dem DOC oder E-DOC katalytisch reagieren und exotherm die Temperatur des Abgases im DOC oder E-DOC und damit vor dem NSC erhöhen kann, so dass die Light-Off-Temperatur im NSC möglichst schnell bzw. der für die NOₓ-Reduktion optimale Betriebspunkt des NSC erreicht wird. Dabei wird das durch den zusätzlich eingespritzten Kraftstoff und dessen exotherme Reaktion im DOC oder E-DOC erhitzte Abgas aus dem DOC oder E-DOC in den NSC überführt und beeinflusst dabei die Betriebsweise des NSC in Richtung auf Einstellung eines optimalen Betriebspunkts des NSC und damit eine optimale Reduktion der NOₓ.

Weiterhin ist es von Vorteil, wenn das Motorsteuergerät des Diesel-Fahrzeugs über den CAN-Bus des Diesel-Fahrzeugs mit HDEV, E-DOC und NSC sowie vorhandenen Sensoren verbunden ist. Dadurch kann insbesondere als unterstützendes System mit der ohnehin vorhandenen Elektronik des Fahrzeugs auch die Abgasreinigung geregelt und gesteuert werden, da die Sensorsignale und die Stellsignale für HDEV, E-DOC und NSC von dem Motorsteuergerät des Diesel-Fahrzeugs verarbeitet bzw. abgegeben werden können, In diesem Fall ist eine Nachrüstung mit zusätzlicher Steuerungshardware nicht notwendig, lediglich die Steuerungssoftware des Motorsteuergerätes muss modifiziert werden.

Insbesondere für die Nachrüstung entsprechender Abgasbehandlungsvorrichtungen ist es aber auch denkbar, dass ein separates elektronisches Ansteuergerät mit HDEV, E-DOC und NSC sowie vorhandenen Sensoren verbunden ist und die eigentliche Beeinflussung der Abgasreinigung durch die Komponenten der erfindungsgemäßen Vorrichtung übernimmt. Dann können HDEV, E-DOC und NSC sowie die Sensoren ggf. auch unabhängig von dem Motorsteuergerät des Diesel-Fahrzeugs betrieben werden. Selbstverständlich ist es aber auch denkbar, dass das separate elektronische Ansteuergerät über den CAN-Bus des Diesel-Fahrzeugs mit dem Motorsteuergerät des Diesel-Fahrzeugs verbunden ist und entsprechende Informationen über den CAN-Bus mit dem Motorsteuergerät des Diesel-Fahrzeugs austauscht. Hierzu muss dann weder die Hardware noch die Software des Motorsteuergerätes verändert werden.

Hierbei ist es von besonderem Vorteil, wenn die Sensoren die Seriensensorsignale Temperatur hinter dem Dieselpartikelfilter (T nach DPF), Stickoxide hinter dem Dieselpartikelfilter (NOₓ nach DPF), HFM und/oder Lambda an das Motorsteuergerät und/oder an das separate elektronische Ansteuergerät übermitteln. Hierdurch können im Motorsteuergerät oder in dem separaten elektronischen Ansteuergerät aus diesen Messwerten Schlussfolgerungen für die Eindosierung des Kraftstoffs durch das HDEV sowie die Betriebsweise von HDEV und Vorrichtung gezogen und aktuatorisch auf E-DOC und HDEV eingewirkt werden.

In weiterer Ausgestaltung können jeweils eine Lambdasonde vor oder auch nach dem DOC oder E-DOC und/oder mindestens ein Abgastemperatursensor, vorzugsweise in Strömungsrichtung des Abgases hinter dem DOC oder E-DOC bzw. vor dem NSC, angeordnet werden, die Aussagen über die Betriebsweise der jeweiligen Katalysatoren ermitteln und weiter melden können.

Weiterhin ist es denkbar, dass mindestens ein NOₓ-Sensor oder ein Lambdasensor hinter dem NSC angeordnet ist, der die Effektivität der Abgasreinigung im NSC überwacht und ggf. als Führungsgröße für die Einspritzung des Kraftstoffs mittels HDEV dienen kann.

Die Einspeicherfähigkeit des NSC wird über ein NOₓ-Speichermodell und/oder einen NOₓ-Sensor nach dem NSC ermittelt. Sobald die Speicherfähigkeit des NSC erreicht ist, erfolgt eine NSC-Regeneration. Diese Regeneration kann mittels einer Günstigkeitserkennung auch vor dem Erreichen der maximalen Einspeicherfähigkeit des NSC erfolgen. Günstigkeiten zur NSC Regeneration liegen z.B. im Leerlauf und in den innerstädtischen Konstantgeschwindigkeiten bei ca. 30 und 50 km/h vor. Aufgrund des niedrigeren Sauerstoffanteils im Abgas in diesen Betriebspunkten kann eine NSC-Regeneration mit geringerem Kraftstoffeintrag durch das HDEV erfolgen, welches sowohl im Hinblick auf den Kraftstoffverbrauch als auch für die thermische Belastung der Katalysatoren vorteilhaft ist. Ein weiterer Vorteil zur Durchführung der NSC-Regeneration in diesen Betriebspunkten sind die geringeren Raumgeschwindigkeiten im NOₓ-Speicherkatalysator, welche eine effiziente NOₓ-Umsetzung unterstützt. Der mittels HDEV eindosierte Kraftstoff setzt sich im NSC unter gleichzeitiger Erwärmung des NSC mit dem im Abgas vorhandenen Sauerstoff um und die zusätzlich eingebrachten Kraftstoffanteile (HC) reagieren mit dem eingelagerten NOₓ zu Stickstoff, Kohlendioxid und Wasser.

Zum Abbruch der NSC-Regeneration und der damit verbundenen Kraftstoffeinspritzung mittels HDEV dient ein NOₓ-Austragungsmodell. Zusätzlich kann der NSC-Regenerationsvorgang durch das Vorsehen eines NOₓ-Sensors oder eines Lambdasensor erkannt und beendet werden. Beim NOₓ-Sensor anhand der gemessenen NOₓ-Anzahl in [ppm], bei Einsatz eines Lambdasensors kann bei Lambda<1 anhand der Temperatursonde ein Temperaturabfall gemessen werden, welcher als Abbruchbedingung der Regeneration dienen kann.

Weiterhin ist es denkbar, dass die Vorrichtung vor allem bei einer Nachrüstung einen Abgas-Bypasskanal mit einer oder mehreren Abgasklappen aufweist, durch den Abgas oder Abgasteilströme gezielt zurück geführt oder an Teilstrecken der Abgasreinigung vorbei geführt werden können.

Weiterhin ist es denkbar, dass die Vorrichtung mindestens ein zusätzliches HC-Dosier-Ventil zur Eindosierung zusätzlicher Kohlenwasserstoffe zur katalytischen Reduktion von NOₓ aufweist. Derartige zusätzliche Kohlenwasserstoffe können z.B. durch gecrackte Verbrennung aus dem Kraftstoff gezielt gewonnen werden und dem Abgas zur Erreichung bestimmter katalytischer Reaktionen zusätzlich zugeführt werden.

Die Erfindung betrifft weiterhin ein Verfahren zum Betrieb einer Vorrichtung für Abgasreinigungssysteme an Dieselfahrzeugen zur Nachrüstung von Diesel-Bestandsfahrzeugen mit einem Dieselpartikelfilter oder ergänzend für Neuentwicklungen als unterstützendes System für Fahrzeuge mit vorhandenen Abgasbehandlungssystemen, insbesondere für den innerstädtischen Fahrbetrieb. Ein derartiges Verfahren wird dadurch weitere entwickelt, dass stromab eines fahrzeugseitig bereits vorhandenen Abgasreinigungssystems des Dieselfahrzeugs in der Vorrichtung mindestens ein Hochdruck-Einspritzventil (HDEV) sowie ein NOₓ-Speicher-Katalysator (NSC) derart funktionsmäßig miteinander gekoppelt werden, dass über das in Strömungsrichtung des Abgases vor dem NSC installierte HDEV in Fahrzuständen, in denen der NOₓ-Speicher-Katalysator (NSC) nicht hinreichend erwärmt wird, Kraftstoff in die Vorrichtung eindosiert wird, wo durch die katalytische Umsetzung des eindosierten Kraftstoffs in dem NSC durch exotherme Reaktion des Kraftstoffs eine weitere Temperaturanhebung erfolgt, welche die Temperatur im NSC in einem Bereich der optimalen NOₓ-Umsetzung bringt und das HDEV zur NSC-Regeneration verwendet wird bzw. diese NSC-Regeneration regelt.

Die Vorteile und Eigenschaften des Verfahrens stehen in engem Zusammenhang mit den Vorteilen und Eigenschaften der vorstehend beschriebenen Vorrichtung und sind daher sinngemäß schon zur Vorrichtung beschrieben worden. Hierauf wird ausdrücklich Bezug genommen.

Weiterhin ist es denkbar, dass zwischen Hochdruck-Einspritzventil (HDEV) und NOₓ-Speicher-Katalysator (NSC) mindestens ein Oxidationskatalysator (DOC) oder mindestens ein elektrisch beheizter Oxidationskatalysator (E-DOC) angeordnet wird. Durch die zusätzliche katalytische Umsetzung des eindosierten Kraftstoffs in dem DOC oder E-DOC durch exotherme Reaktion des Kraftstoffs kann eine weitere Temperaturanhebung des NSC hervorgerufen werden, der zu einem schnelleren Erreichen optimaler Umwandlungsbedingungen des Abgases im NSC führt.

In weiterer Ausgestaltung ist es denkbar, dass unterhalb der Light-Off-Temperatur des NSC mit Hilfe der Heizeinrichtung des E-DOC die Temperatur im E-DOC auf die erforderliche Light-Off-Temperatur im E-DOC angehoben wird, wonach über das in Strömungsrichtung des Abgases vor dem E-DOC installierte HDEV Kraftstoff in die Abgasanlage eindosiert wird, wo durch die katalytische Umsetzung des eindosierten Kraftstoffs eine weitere Temperaturanhebung durch exotherme Reaktion des Kraftstoffs im E-DOC erfolgt, welche die Temperatur im NSC in einem Bereich der optimalen NOₓ-Umsetzung bringt.

Von besonderem Vorteil ist es, dass das HDEV bei niedrigen Soll-Kraftstoffmengen bei verringerter Ansteuerfrequenz betrieben werden kann. Zur Eindosierung des Kraftstoffes mittels HDEV wird bei bereits kleinen Dosiermengen eine hohe Frequenz für die kontinuierliche Einspritzung angestrebt. Der limitierende Faktor ist hierbei die minimale Ansteuerdauer des Ventils. Deshalb wird bei niedrigen Soll-Kraftstoffmengen die Ansteuerfrequenz verringert. Dabei kann das Regelschema der Einspritzung des Kraftstoff mittels HDEV in zwei Schritten erfolgen. Im Kleinstmengenbereich erfolgt eine konstante Ansteuerung des HDEV auf seinen minimalen Ansteuerwert bei einer variablen Ansteuerfrequenz von 0 - ca. 200Hz. Oberhalb eines geeigneten Wertes erfolgt eine konstante Ansteuerfrequenz bei einer variablen Ansteuerzeit. Damit kann das HEDV für jeden Betriebzustand des Dieselfahrzeugs passend gesteuert werden, die unterschiedliche Einspritzmengen an Kraftstoff in den Abgasstrang erfordern.

Die erfindungsgemäße Vorrichtung und das entsprechende Verfahren beschreiben bevorzugt ein Unterbodensystem als Nachrüstung oder Unterstützung vorhandener Abgasbehandlungseinrichtungen zur Emissionsreduzierung, insbesondere im innerstädtischen Fahrbetrieb. Das hier beschriebene Unterbodensystem zur Nachrüstung besteht aus Katalysatoren, welche Abgas von schädlichen Bestandteilen durch seine oxidierende und reduzierende Wirkung reinigen können. Im Allgemeinen ist bekannt, dass zum Erreichen der katalytischen Wirkung die Katalysatoren innerhalb eines bestimmten Temperaturbereiches liegen müssen. Im innerstädtischen Betrieb besteht das Problem, dass das Abgasreinigungssystem für die NOₓ-Reduktion zu kalt ist. Um dies deutlich zu verbessern wird das erfindungsgemäße Verfahren vorgeschlagen.

Eine besonders bevorzugte Ausführungsform der erfindungsgemäßen Vorrichtung zeigt die Zeichnung.

Es zeigen:

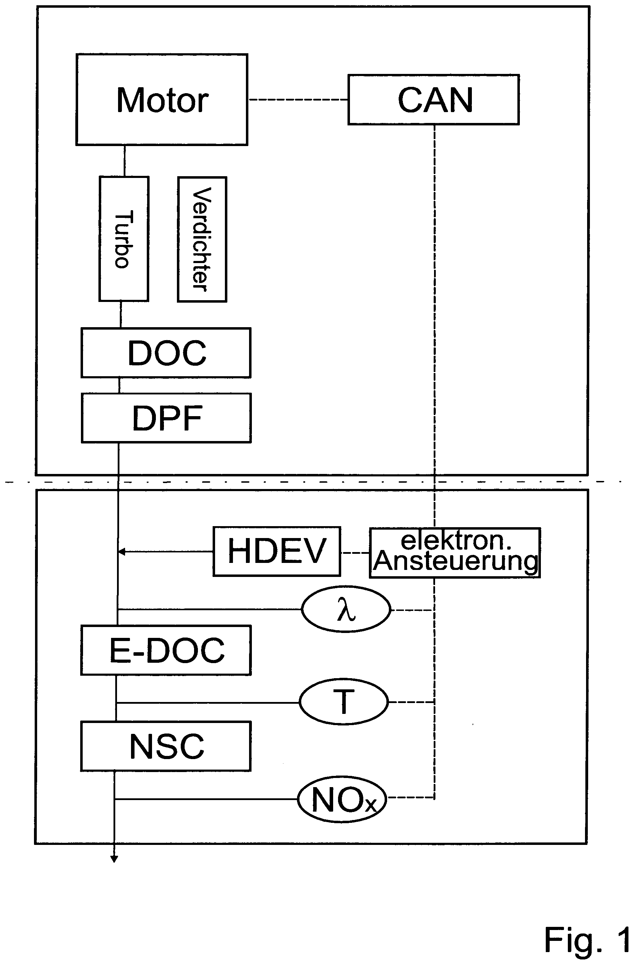

- Figur 1 -: eine schematische Darstellung der Komponenten der erfindungsgemäßen Vorrichtung.

In der Figur 1 ist in einer rein schematischen Darstellung eine bevorzugte Anordnung der erfindungsgemäßen Vorrichtung als Nachrüstlösung an einem bestehenden Dieselfahrzeug dargestellt, das gemäß der Darstellung im oberen Kasten der Figur 1 hinter einem Motor mit nachgeschaltetem Turbolader und Verdichter mit einem Dieselpartikelfilter DPF sowie einem vorgeschalteten DOC ausgestattet ist. Die Fahrzeugelektronik ist hier vereinfachend als CAN-Baustein angegeben, der mit dem Motor als Motorsteuerungsgerät gekoppelt ist.

Im unteren Kasten sind nun die Komponenten der erfindungsgemäßen Vorrichtung als Nachrüstlösung an diesem Bestand-Dieselfahrzeug zu erkennen. Hierbei wird etwa im Bereich des Auslasses nach dem DPF oder direkt vor oder an dem E-DOC das HDEV angeordnet, mit dem Kraftstoff aus einem nicht weiter dargestellten und ohnehin vorhandenen Kraftstoffvorrat des Fahrzeugs in den Abgasstrom eingedüst werden kann. Vor oder auch nach dem DOC, E-DOC, NSC kann ein herkömmlicher Lambdasensor (als Linearsonde wie z.B. Bosch LSU 4.9) angeordnet sein, der zur Regelung des Sollgemisches (Lambda = ca. 0,96) mittels HDEV in der Abgasanlage während der NSC-Regeneration genutzt wird. Sowohl HDEV als auch λ-Sensor sind mit einer elektronischen Ansteuerungseinrichtung signaltechnisch und ggf. aktuatorisch verbunden, die diese beiden Komponenten, aber auch weitere Komponenten der erfindungsgemäßen Vorrichtung miteinander verbindet und steuernd und regelnd arbeitet. Dabei kann diese elektronische Ansteuerungseinrichtung über den CAN-Bus des Fahrzeugs mit der Motorelektronik verbunden sein und entsprechende Werte mit dieser Motorelektronik austauschen, was ebenfalls durch die Verbindung mit dem CAN-Modul angedeutet ist.

Das HDEV kann ein aus der Benzineinspritzung an sich bekanntes Hochdruck-Einspritzventil als Magnetventil oder Piezzoventil sein, dessen Vorteile und Eigenschaften allgemein bekannt sind. Hier dient dieses HDEV aber nicht zur motorinternen Einspritzung von Kraftstoff in die Brennräume des Motors, sondern zur Einspritzung von Kraftstoff in den Abgasstrom hinter dem DPF.

Hinter dem HDEV bzw. dem λ-Sensor kann dann ein elektrisch heizbarer E-DOC angeordnet sein und wird von dem aus dem DPF kommenden Abgasstrom durchströmt. Dahinter sitzt, von dem gleichen Abgasstrom durchströmt, ein NSC. Zwischen E-DOC und NSC kann ein Temperatursensor T angeordnet werden, der den aus dem E-DOC kommenden und wie nachstehend beschrieben erwärmten Abgasstrom auf die jeweils vorliegende Temperatur überwacht und diesen Temperaturwert ebenfalls an die elektronische Ansteuerungseinrichtung weiter meldet. Am Ausgang des NSC kann dann noch ein NOₓ-Sensor oder ggf. ein Lambdasensor angeordnet werden, der den Grad der NOₓ-Reduktion und den eingespeicherte NOₓ-Füllstand nach dem NSC misst und ebenfalls an die elektronische Ansteuerungseinrichtung weiter meldet. Im Falle der Nutzung eines Lambdasensors wird die eingebaute Temperatursensorik der Lambdasonde neben der Gemischregelung des HDEV während der NSC-Regeneration auch zur Ermittlung der NOₓ-Austragung verwendet.

Die Betriebsweise des NSC erfolgt optimalerweise in seinem Nenn-Arbeitsbereich, darf jedoch auf keinen Fall unterhalb einer bestimmten sog. Light-Off-Temperatur erfolgen, da dann die Abgasreinigung in dem NSC nahezu zum Erliegen kommt. Da gerade im städtischen Straßenverkehr die Dieselfahrzeuge nur kurze Strecken zurück legen, werden die Abgase häufig nicht in Temperaturbereiche kommen, die eine sinnvolle oder sogar optimale Betriebstemperatur der Katalysatoren und insbesondere des NSC erlauben. Um diesen dann suboptimalen oder sogar völlig unzureichenden Reinigungsbetrieb des NSC zu vermeiden, kann über eine Heizeinrichtung mit Hilfe eines elektrisch beheizten Oxidationskatalysators (E-DOC) die Temperatur im E-DOC bis auf die erforderliche Light-Off-Temperatur (typischerweise etwa 150 °C) im E-DOC angehoben werden. Bei Erreichen dieser Light-Off-Temperatur im E-DOC kann dann das HDEV alternativ oder zusätzlich zur elektrischen Beheizung des E-DOC Kraftstoff in den Abgasstrang bzw. den E-DOC eindosieren, der durch katalytische Reaktionen im E-DOC exotherm den E-DOC weiter erwärmt. Das derart im E-DOC weiter erwärmte Abgas strömt dann in den NSC und erwärmt damit den NSC schnell auf seine Light-Off-Temperatur. Damit wird der NSC kurzfristig zumindest in einem Bereich betrieben, in dem der NSC das Abgas hinreichend von NOₓ reinigen kann, auch wenn dies noch nicht dem optimalen Betriebsbereich entspricht.

Mit Erreichen der Light-Off-Temperatur im E-DOC kann die elektrische Einheit des E-DOC aber auch deaktiviert und statt dessen nur über das vor dem E-DOC installierte Hochdruck-Einspritzventil (HDEV) Kraftstoff in die Abgasanlage eindosiert werden. Durch die katalytische Umsetzung des eingedosierten Gemisches erfolgt eine weitere Temperaturanhebung durch exotherme Reaktion im Katalysator des E-DOC, welche nach Weiterleitung des so erhitzten Abgases an den NSC die Temperatur des NSC in sein Arbeitsfenster der optimalen NOₓ-Umsetzung bringt und damit eine optimale Reinigung des Abgases von NOₓ erlaubt. Damit kann der NSC auch bei kurzen Fahrstrecken und nahezu unabhängig von dem jeweiligen Fahrzustand zumindest hinreichend genug arbeiten, um die gesetzlichen Vorgaben auch bei Kurzstreckenbetrieb zu erfüllen. Eine derartige Anordnung ist gerade auch zur Nachrüstung von Bestand-Dieselfahrzeugen geeignet, die zwar schon einen DPF aufweisen, die erweiterten Erwartungen an eine wirkungsvolle Abgasreinigung in der sogenannten "extended Area" (außerhalb der im Abgastest gefahrenen Bereiche) gemäß der Vorgaben der Normen EU 5 und 6 aber bauartbedingt nicht erfüllen können.

Ebenfalls besteht die Möglichkeit der Nutzung des oben beschriebenen Systems ganz ohne die Nutzung eines DOC oder E-DOC. Bei der nicht als Figur dargestellten Variante erfolgt die Erwärmung des NSC allein durch Einspritzung von Kraftstoff über das HDEV direkt in den Bereich vor dem NSC ab einer geeigneten Mindesttemperatur zur weiteren katalytischen Umsetzung dieses eindosierten Kraftstoffs im NSC, da der NSC ebenfalls eine Wirkung als Oxidationskatalysator besitzt.

In einer weiteren, ebenfalls nicht dargestellten Ausgestaltung besteht die Möglichkeit der Nutzung eines oben beschriebenen Systems mit der Nutzung eines reinen Oxidationskatalysators (DOC) ohne integrierte Heizung anstelle eines E-DOC. Hierbei erfolgt die Erwärmung im DOC und im NSC ebenfalls durch Einspritzung von Kraftstoff über das HDEV vor dem DOC. Auch hierbei wird dieser eindosierte Kraftstoff im DOC und im NSC katalytisch umgesetzt und trägt damit zur Temperierung des NSC in seinem optimalen Betriebsbereich bei.

## Patentansprüche

1. Vorrichtung für Abgasreinigungssysteme von Dieselfahrzeugen zur Nachrüstung von Diesel-Bestandsfahrzeugen mit einem Dieselpartikelfilter oder ergänzend für Neuentwicklungen als unterstützendes System für Fahrzeuge mit vorhandenen Abgasbehandlungssystemen, insbesondere für den innerstädtischen Fahrbetrieb,
**dadurch gekennzeichnet, dass**
stromab eines fahrzeugseitig bereits vorhandenen Abgasreinigungssystems des Dieselfahrzeugs in der Vorrichtung mindestens ein Hochdruck-Einspritzventil (HDEV) und mindestens ein NOₓ-Speicher-Katalysator (NSC) in Strömungsrichtung des Abgases funktionsmäßig hintereinander angeordnet sind, wobei das vor dem NOₓ-Speicher-Katalysator (NSC) installierte Hochdruck-Einspritzventil (HDEV) zumindest in Fahrzuständen, in denen der NOₓ-Speicher-Katalysator (NSC) nicht hinreichend erwärmt wird, derart Kraftstoff in die Vorrichtung eindosiert, dass durch die katalytische Umsetzung des eindosierten Kraftstoffs eine Temperaturanhebung in dem NOₓ-Speicher-Katalysator (NSC) durch exotherme Reaktion des Kraftstoffs erfolgt, welche die Temperatur im NOₓ-Speicher-Katalysator (NSC) in einen Bereich der optimalen NOₓ-Umsetzung bringt.

2. Vorrichtung gemäß Anspruch 1, **dadurch gekennzeichnet, dass** zwischen Hochdruck-Einspritzventil (HDEV) und NOₓ-Speicher-Katalysator (NSC) mindestens ein Oxidationskatalysator (DOC) oder mindestens ein elektrisch beheizter Oxidationskatalysator (E-DOC) angeordnet ist.

3. Vorrichtung gemäß Anspruch 2, **dadurch gekennzeichnet, dass** durch den von dem HDEV zumindest zeitweise eindosierten Kraftstoff durch die katalytische Umsetzung des eindosierten Kraftstoffs eine weitere Temperaturanhebung im DOC oder E-DOC durch exotherme Reaktion des Kraftstoffs erfolgt, welche die Temperatur im NSC in einen Bereich der optimalen NOₓ-Umsetzung bringt.

4. Vorrichtung gemäß einem der Ansprüche 2 oder 3, **dadurch gekennzeichnet, dass** die Heizeinrichtung des E-DOC derart ausgebildet ist, dass die Heizeinrichtung unterhalb der Light-Off-Temperatur des E-DOC die Temperatur im E-DOC auf die erforderliche Light-Off-Temperatur des E-DOC anhebt.

5. Vorrichtung gemäß einem der vorstehenden Ansprüche, **dadurch gekennzeichnet, dass** die Vorrichtung stromabwärts eines bestehenden Abgassystems an Dieselfahrzeugen mit vorhandenen Abgasbehandlungssystemen angeordnet ist und das bestehende Abgassystem bei der Abgasreinigung unterstützt.

6. Vorrichtung gemäß einem der Ansprüche 2 bis 5, **dadurch gekennzeichnet, dass** das HDEV für eine Eindosierung von Kraftstoff in eine Abgasanlage in Strömungsrichtung des Abgases vor dem DOC oder E-DOC angeordnet ist, vorzugsweise im Abgasstrang vor dem DOC oder E-DOC.

7. Vorrichtung gemäß einem der vorstehenden Ansprüche, **dadurch gekennzeichnet, dass** das HDEV eine geeignete Luft- und/oder Wasserkühlung aufweist und/oder eine Positionierung an Abgasstrang oder vor dem DOC oder E-DOC für einen temperatursicheren Betrieb und vorzugsweise ein Magnetventil oder ein Piezzoventil aufweist.

8. Vorrichtung gemäß einem der vorstehenden Ansprüche, **dadurch gekennzeichnet, dass** da**s** Motorsteuergerät des Diesel-Fahrzeugs über den CAN-Bus des Diesel-Fahrzeugs mit HDEV, DOC oder E-DOC und NSC sowie vorhandenen Sensoren verbunden ist oder ein separates elektronisches Ansteuergerät mit HDEV, DOC oder E-DOC und NSC sowie vorhandenen Sensoren verbunden ist, vorzugsweise das separate elektronische Ansteuergerät über den CAN-Bus des Diesel-Fahrzeugs mit dem Motorsteuergerät des Diesel-Fahrzeugs verbunden ist.

9. Vorrichtung gemäß einem der vorstehenden Ansprüche, **dadurch gekennzeichnet, dass** eine Lambdasonde vor und/oder hinter dem DOC oder E-DOC angeordnet ist und/oder mindestens ein Abgastemperatursensor vor dem NSC, vorzugsweise in Strömungsrichtung des Abgases vor und/oder hinter dem DOC oder E-DOC, angeordnet ist

10. Vorrichtung gemäß einem der vorstehenden Ansprüche, **dadurch gekennzeichnet, dass** mindestens ein NOₓ-Sensor oder ein Lambdasensor vor und/oder hinter dem NSC angeordnet ist.

11. Vorrichtung gemäß einem der vorstehenden Ansprüche, **dadurch gekennzeichnet, dass** die Vorrichtung einen Abgas-Bypasskanal mit einer oder mehreren Abgasklappen aufweist.

12. Verfahren zum Betrieb einer Vorrichtung für Abgasreinigungssysteme an Dieselfahrzeugen zur Nachrüstung von Diesel-Bestandsfahrzeugen mit einem Dieselpartikelfilter oder ergänzend für Neuentwicklungen als unterstützendes System für Fahrzeuge mit vorhandenen Abgasbehandlungssystemen, insbesondere für den innerstädtischen Fahrbetrieb,
**dadurch gekennzeichnet, dass**
stromab eines fahrzeugseitig bereits vorhandenen Abgasreinigungssystems des Dieselfahrzeugs in der Vorrichtung mindestens ein Hochdruck-Einspritzventil (HDEV) sowie ein NOₓ-Speicher-Katalysator (NSC) derart funktionsmäßig miteinander gekoppelt werden, dass über das in Strömungsrichtung des Abgases vor dem NSC installierte HDEV in Fahrzuständen, in denen der NOₓ-Speicher-Katalysator (NSC) nicht hinreichend erwärmt wird, Kraftstoff in die Vorrichtung eindosiert wird, wo durch die katalytische Umsetzung des eindosierten Kraftstoffs in dem NSC durch exotherme Reaktion des Kraftstoffs eine weitere Temperaturanhebung erfolgt, welche die Temperatur im NSC in einem Bereich der optimalen NOₓ-Umsetzung bringt und das HDEV zur NSC-Regeneration verwendet wird bzw. diese NSC-Regeneration regelt.

13. Verfahren gemäß Anspruch 12, **dadurch gekennzeichnet, dass** zwischen Hochdruck-Einspritzventil (HDEV) und NOₓ-Speicher-Katalysator (NSC) mindestens ein Oxidationskatalysator (DOC) und/oder mindestens ein elektrisch beheizter Oxidationskatalysator (E-DOC) angeordnet wird, wobei unterhalb der Light-Off-Temperatur des E-DOC vorzugsweise mit Hilfe der Heizeinrichtung des E-DOC die Temperatur im E-DOC auf die erforderliche Light-Off-Temperatur des E-DOC angehoben wird.

14. Verfahren gemäß einem der Ansprüche 12 oder 13, **dadurch gekennzeichnet, dass** das HDEV bei niedrigen Soll-Kraftstoffmengen bei verringerter Ansteuerfrequenz betrieben wird, vorzugsweise im Kleinstmengenbereich bei einer konstanten Ansteuerung auf seinem minimalen Ansteuerwert bei einer variablen Ansteuerfrequenz von 0 - ca. 200 Hz und/oder oberhalb eines Schwellenwertes der Soll-Kraftstoffmenge mit konstanter Ansteuerfrequenz bei einer variablen Ansteuerzeit betrieben wird.

15. Verfahren gemäß einem der Ansprüche 12 bis 14, **dadurch gekennzeichnet, dass** HDEV, E-DOC und NSC und vorhandene Sensoren von dem Motorsteuergerät des Diesel-Fahrzeugs und/oder einem separaten elektronischen Ansteuergerät, vorzugsweise autark von der Fahrzeugelektronik oder über den CAN-Bus des Diesel-Fahrzeugs, miteinander und/oder mit dem Motorsteuergerät des Diesel-Fahrzeugs verbunden und gesteuert werden.

16. Verfahren gemäß einem der Ansprüche 12 bis 15, **dadurch gekennzeichnet, dass** mindestens ein Abgastemperatursensor, vorzugsweise in Strömungsrichtung des Abgases vor und/oder hinter dem DOC oder E-DOC, angeordnet wird, der die Abgastemperatur vor dem NSC misst.

17. Verfahren gemäß einem der Ansprüche 12 bis 16, **dadurch gekennzeichnet, dass** mindestens ein NOₓ-Sensor oder ein nachgrüsteter Lambdasensor hinter dem NSC angeordnet wird, der den Grad der NOₓ-Reduktion misst und zur Regelung der NSC-Regeneration, insbesondere zur Erkennung der Beendigung der NSC-Regeneration dient.

18. Verfahren gemäß einem der Ansprüche 12 bis 17, **dadurch gekennzeichnet, dass** die Einspeicherfähigkeit des NSC über ein NOₓ-Speichermodell und/oder einen NOₓ-Sensor nach dem NSC ermittelt wird.

19. Verfahren gemäß einem der Ansprüche 12 bis 18, **dadurch gekennzeichnet, dass** die Vorrichtung die Sensorsignale Temperatur hinter dem Dieselpartikelfilter T nach DPF, Stickoxide hinter dem Dieselpartikelfilter NOₓ nach DPF, HFM und/oder Lambda an das Motorsteuergerät und/oder an das separate elektronische Ansteuergerät übermittelt.

## Claims

1. Device for exhaust gas cleaning systems of diesel vehicles for retrofitting existing diesel vehicles with a diesel particle filter or as a supplement for new developments as a supporting system for vehicles with existing exhaust gas treatment systems, in particular for intra-urban driving,
**characterized in that**
at least one high-pressure injection valve (HDEV) and at least one NOₓ storage catalyst (NSC) are arranged functionally one behind the other in the device in the direction of the flow of the exhaust gas downstream of an exhaust gas purification system of the diesel vehicle which is already present on the vehicle, the high-pressure injection valve (HDEV) installed upstream of the NOₓ storage catalyst (NSC) at least in driving states, in which the NOₓ storage catalyst (NSC) is not sufficiently heated, meters fuel into the device in such a way that, as a result of the catalytic conversion of the metered fuel, a temperature increase takes place in the NOₓ storage catalyst (NSC) by means of an exothermic reaction of the fuel which brings the temperature in the NOₓ storage catalyst (NSC) into a range of optimum NOₓ conversion.

2. Device according to claim 1, **characterized in that** at least one oxidation catalyst (DOC) or at least one electrically heated oxidation catalyst (E-DOC) is arranged between the high-pressure injection valve (HDEV) and the NOₓ storage catalyst (NSC).

3. Device according to claim 2, **characterized in that** the fuel metered in at least temporarily by the HDEV causes a further temperature increase in the DOC or E-DOC by the catalytic conversion of the metered in fuel by exothermic reaction of the fuel, which brings the temperature in the NSC into a range of the optimum NOₓ conversion.

4. Device according to one of claims 2 or 3, **characterized in that** the heating device of the E-DOC is designed in such a way that below the light-off temperature of the E-DOC the heating device raises the temperature in the E-DOC to the required light-off temperature of the E-DOC.

5. Device according to one of the above mentioned claims, **characterized in that** the device is located downstream of an existing exhaust system on diesel vehicles with existing exhaust treatment systems and supports the existing exhaust system during exhaust gas purification.

6. Device according to one of claims 2 to 5, **characterized in that** the HDEV for metering in fuel into a exhaust system is arranged in the direction of the flow of the exhaust gas upstream of the DOC or E-DOC, preferably in the exhaust line upstream of the DOC or E-DOC.

7. Device according to one of the above mentioned claims, **characterized in that** the HDEV has a suitable air cooling and/or water cooling and/or a positioning at the exhaust line or upstream of the DOC or E-DOC for a temperature-safe operation and preferably shows a solenoid valve or a piezo valve.

8. Device according to one of the above mentioned claims, **characterized in that** the engine control device of the diesel vehicle is connected via the CAN bus of the diesel vehicle to HDEV, DOC or E-DOC and NSC and existing sensors or a separate electronic control device is connected to HDEV, DOC or E-DOC and NSC and existing sensors, preferably the separate electronic control device is connected via the CAN bus of the diesel vehicle to the engine control device of the diesel vehicle.

9. Device according to one of the above mentioned claims, **characterized in that** a lambda sensor is arranged upstream and/or downstream the DOC or E-DOC and/or at least one exhaust gas temperature sensor is arranged upstream of the NSC, preferably in the direction of the flow of the exhaust gas upstream and/or downstream of the DOC or E-DOC.

10. Device according to one of the above mentioned claims, **characterized in that** at least one NOₓ sensor or one lambda sensor is located upstream and/or downstream the NSC.

11. Device according to one of the above mentioned claims, **characterized in that** the device has an exhaust gas bypass duct with one or more exhaust gas flaps.

12. Method for operating of a device for exhaust gas cleaning systems of diesel vehicles for retrofitting existing diesel vehicles with a diesel particle filter or as a supplement for new developments as a supporting system for vehicles for vehicles with existing exhaust gas treatment systems, in particular for intra-urban driving,
**characterized in that**
at least one high-pressure injection valve (HDEV) and one NOₓ storage catalyst (NSC) are operatively coupled to each other in the device downstream of an exhaust gas purification system of the diesel vehicle which is already present on the vehicle, where by means of the HDEV installed upstream of the NSC at least in driving states, in which the NOₓ storage catalyst (NSC) is not sufficiently heated, fuel is metered into the device, where by the catalytic conversion of the metered fuel in the NSC a further temperature increase by exothermic reaction of the fuel takes place, which brings the temperature in the NSC in a range of the optimum NOₓ conversion and that the HDEV is used for NSC regeneration or regulates the NSC regeneration.

13. Method according to claim 12, **characterized in that** at least one oxidation catalyst (DOC) and/or at least one electrically heated oxidation catalyst (E-DOC) is arranged between high-pressure injection valve (HDEV) and NOₓ storage catalyst (NSC), the temperature in the E-DOC being raised to the required light-off temperature of the E-DOC below the light-off temperature of the E-DOC, preferably with by means of the heating device of the E-DOC.

14. Method according to one of claims 12 or 13, **characterized in that** the HDEV is operated at low target fuel quantities at a reduced operating frequency, preferably in the minimum quantity range at a constant operating value at its minimum operating value at a variable operating frequency of 0 - about 200 Hz and/or above a threshold value of the target fuel quantity at a constant operating frequency at a variable operating time.

15. Method according to one of claims 12 to 14, **characterized in that** HDEV, E-DOC and NSC and existing sensors are connected to one another and/or connected and controlled by the engine control unit of the diesel vehicle and/or a separate electronic control device, preferably independently of the vehicle electronics or via the CAN bus of the diesel vehicle.

16. Method according to one of claims 12 to 15, **characterized in that** at least one exhaust gas temperature sensor is arranged preferably upstream and/or downstream of the DOC or the E-DOC in the direction of the flow of the exhaust gas, which measures the exhaust gas temperature upstream of the NSC.

17. Method according to one of claims 12 to 16, **characterized in that** at least a NOₓ sensor or a retrofitted lambda sensor is arranged downstream of the NSC which measures the degree of NOₓ reduction and is used for regulation of NSC regeneration, preferably for detection of the need to finish the NSC regeneration.

18. Method according to one of claims 12 to 17, **characterized in that** the storage capacity of the NSC is determined according to an NOₓ storage model and/or an NOₓ sensor downstream the NSC.

19. Method according to one of claims 12 to 18, **characterized in that** the device transmits the sensor signals temperature downstream of the diesel particle filter T after DPF, nitrogen oxides downstream of the diesel particle filter NOₓ after DPF, HFM and/or Lambda to the engine control device and/or to the separate electronic control device.

## Revendications

1. Dispositif pour des systèmes de purification des gaz d'échappement de véhicules diesel pour la mise à niveau de véhicules diesel en stock avec un filtre à particules diesel ou en complément d'innovations en tant que système d'assistance pour des véhicules avec des systèmes de traitement de gaz d'échappement, en particulier pour le mode de conduite urbain,
**caractérisé en ce que**
en aval d'un système de purification des gaz d'échappement déjà présent côté véhicule du véhicule diesel, au moins une soupape d'injection à haute pression (HDEV) et au moins un catalyseur-accumulateur de NOₓ (NSC) sont agencés dans le sens de circulation des gaz d'échappement de manière fonctionnelle l'un derrière l'autre dans le dispositif, dans lequel la soupape d'injection à haute pression (HDEV) installée devant le catalyseur-accumulateur de NOₓ (NSC) au moins dans des états de conduite, dans lesquels le catalyseur-accumulateur de NOₓ (NSC) n'est suffisamment pas chauffé, dose du carburant dans le dispositif de telle manière que par la conversion catalytique du carburant dosé, une élévation de température dans le catalyseur-accumulateur de NOₓ (NSC) soit effectuée par réaction exothermique du carburant qui amène la température dans le catalyseur-accumulateur de NOₓ (NSC) dans une plage de conversion de NOₓ optimale.

2. Dispositif selon la revendication 1, **caractérisé en ce qu'**au moins un catalyseur d'oxydation (DOC) ou au moins un catalyseur d'oxydation (E-DOC) chauffé électriquement est agencé entre la soupape d'injection à haute pression (HDEV) et le catalyseur-accumulateur de NOₓ (NSC).

3. Dispositif selon la revendication 2, **caractérisé en ce qu'**une autre élévation de température dans le DOC ou E-DOC est effectuée par le carburant dosé au moins temporairement par le HDEV par la conversion catalytique du carburant dosé par réaction exothermique du carburant qui amène la température dans le NSC dans une plage de conversion de NOₓ optimale.

4. Dispositif selon l'une quelconque des revendications 2 ou 3, **caractérisé en ce que** le dispositif de chauffage du E-DOC est réalisé de telle manière que le dispositif de chauffage en dessous de la température d'amorçage du E-DOC élève la température dans le E-DOC à la température d'amorçage nécessaire du E-DOC.

5. Dispositif selon l'une quelconque des revendications précédentes, **caractérisé en ce que** le dispositif est agencé en aval d'un système de gaz d'échappement existant au niveau de véhicules diesel avec des systèmes de traitement de gaz d'échappement et assiste le système de gaz d'échappement existant lors de la purification de gaz d'échappement.

6. Dispositif selon l'une quelconque des revendications 2 à 5, **caractérisé en ce que** le HDEV est agencé pour un dosage de carburant dans une installation de gaz d'échappement dans le sens de circulation des gaz d'échappement devant le DOC ou E-DOC, de préférence dans le brin de gaz d'échappement devant le DOC ou E-DOC.

7. Dispositif selon l'une quelconque des revendications précédentes, **caractérisé en ce que** le HDEV présente un refroidissement d'air et/ou d'eau approprié et/ou un positionnement au niveau du brin de gaz d'échappement ou devant le DOC ou E-DOC pour un fonctionnement à température garantie et de préférence une soupape magnétique ou une soupape piézoélectrique.

8. Dispositif selon l'une quelconque des revendications précédentes, **caractérisé en ce que** l'appareil de commande de moteur du véhicule diesel est relié par le biais du bus CAN du véhicule diesel au HDEV, DOC ou E-DOC et NSC ainsi qu'à des capteurs présents ou un appareil de commande électronique séparé est relié au HDEV, DOC ou E-DOC et NSC ainsi qu'aux capteurs présents, de préférence l'appareil de commande électronique séparé est relié par le biais du bus CAN du véhicule diesel à l'appareil de commande de moteur du véhicule diesel.

9. Dispositif selon l'une quelconque des revendications précédentes, **caractérisé en ce qu'**une sonde Lambda est agencée devant et/ou derrière le DOC ou E-DOC et/ou au moins un capteur de température de gaz d'échappement est agencé devant le NSC, de préférence dans le sens de circulation des gaz d'échappement devant et/ou derrière le DOC ou E-DOC.

10. Dispositif selon l'une quelconque des revendications précédentes, **caractérisé en ce qu'**au moins un capteur de NOₓ ou un capteur Lambda est agencé devant et/ou derrière le NSC.

11. Dispositif selon l'une quelconque des revendications précédentes, **caractérisé en ce que** le dispositif présente un canal de dérivation de gaz d'échappement avec un ou plusieurs clapets d'échappement.

12. Procédé de fonctionnement d'un dispositif pour des systèmes de purification de gaz d'échappement au niveau de véhicules diesel pour la mise à niveau de véhicules diesel en stock avec un filtre à particules diesel ou en complément d'innovations en tant que système d'assistance pour des véhicules avec des systèmes de traitement de gaz d'échappement, en particulier pour le mode de conduite urbain,
**caractérisé en ce que**
en aval d'un système de purification de gaz d'échappement déjà présent côté véhicule du véhicule diesel, au moins une soupape d'injection à haute pression (HDEV) ainsi qu'un catalyseur-accumulateur de NOₓ (NSC) sont couplés l'un à l'autre de manière fonctionnelle dans le dispositif de telle manière que par le biais du HDEV installé dans le sens de circulation des gaz d'échappement devant le NSC dans des états de conduite, dans lesquels le catalyseur-accumulateur de NOₓ (NSC) n'est pas suffisamment chauffé, du carburant est injecté de manière dosée dans le dispositif, où par la conversion catalytique du carburant injecté de manière dosée dans le NSC, une autre élévation de température est effectuée par réaction exothermique du carburant, laquelle amène la température dans le NSC dans une plage de conversion de NOₓ optimale et le HDEV est utilisé pour la régénération du NSC ou régule cette régénération du NSC.

13. Procédé selon la revendication 12, **caractérisé en ce qu'**au moins un catalyseur d'oxydation (DOC) e/ou au moins un catalyseur d'oxydation chauffé électriquement (E-DOC) est agencé entre la soupape d'injection à haute pression (HDEV) et le catalyseur-accumulateur de NOₓ (NSC), dans lequel la température dans le E-DOC en dessous de la température d'amorçage du E-DOC est élevée de préférence à l'aide du dispositif de chauffage du E-DOC à la température d'amorçage du E-DOC.

14. Procédé selon l'une quelconque des revendications 12 ou 13, **caractérisé en ce que** le HDEV est en fonctionnement en cas de faibles quantités de carburant de consigne à une fréquence de commande réduite, de préférence est en fonctionnement dans la plus petite plage de quantité pour une commande constante à sa valeur de commande minimale à une fréquence de commande variable de 0 à environ 200 Hz et/ou au-dessus d'une valeur seuil de la quantité de carburant de consigne à une fréquence de commande constante pour un temps de commande variable.

15. Procédé selon l'une quelconque des revendications 12 à 14, **caractérisé en ce que** les HDEV, E-DOC et NSC et les capteurs présents sont reliés et commandés par l'appareil de commande de moteur du véhicule diesel et/ou un appareil de commande électronique séparé, de préférence de manière autonome par l'électronique de véhicule ou par le biais du bus CAN du véhicule diesel, entre eux et/ou à l'appareil de commande de moteur du véhicule diesel.

16. Procédé selon l'une quelconque des revendications 12 à 15, **caractérisé en ce qu'**au moins un capteur de température de gaz d'échappement est agencé, de préférence dans le sens de circulation des gaz d'échappement devant et/ou derrière le DOC ou E-DOC qui mesure la température de gaz d'échappement devant le NSC.

17. Procédé selon l'une quelconque des revendications 12 à 16, **caractérisé en ce qu'**au moins un capteur de NOₓ ou un capteur Lambda mis à niveau est agencé derrière le NSC qui mesure le degré de la réduction du NOₓ et sert à la régulation de la régénération du NSC, en particulier à la reconnaissance de la fin de la régénération du NSC.

18. Procédé selon l'une quelconque des revendications 12 à 17, **caractérisé en ce que** la capacité d'accumulation du NSC est calculée par le biais d'un modèle d'accumulateur de NOₓ et/ou d'un capteur de NOₓ après le NSC.

19. Procédé selon l'une quelconque des revendications 12 à 18, **caractérisé en ce que** le dispositif transmet les signaux de capteur température derrière le filtre à particules diesel T après le DPF, oxydes d'azote derrière le filtre à particules diesel NOₓ après le DPF, HFM et/ou lambda à l'appareil de commande de moteur et/ou à l'appareil de commande électronique séparé.
